# EUROPÄISCHE PATENTSCHRIFT

(11) **EP 3 029 786 B1**
(45) Veröffentlichungstag und Bekanntmachung des Hinweises auf die Patenterteilung: **19.09.2018**
(21) Anmeldenummer: 15196661.1
(22) Anmeldetag: 27.11.2015
(51) Int. Cl.: H02B 1/30

(54) **SCHALTSCHRANKGEHÄUSE**
SWITCHBOARD ENCLOSURE
BOITIER D'ARMOIRE ELECTRIQUE

(30) Priorität: 05.12.2014 DE 102014117958
(43) Veröffentlichungstag der Anmeldung: 08.06.2016
(73) Patentinhaber: ABB AG, 68309 Mannheim (DE)
(72) Erfinder: Roth, Michael, 77880 Sasbach (DE)

(56) Entgegenhaltungen:
- EP-A2- 0 319 483
- DE-U1- 9 106 011
- DE-U1- 20 003 279
- US-A- 5 066 832

## Beschreibung

Die Erfindung geht aus von einem Schaltschrankgehäuse mit mindestens einer Rückwand, einer Bodenwand, einer Deckwand und mindestens zwei Seitenwänden, wobei die Rückwand und die Seitenwände aus einem U-förmig gebogenen Blech mit einer umlaufenden oder jeweils entlang der Längsseiten der Seitenwände verlaufenden, nach innen gebogenen umlaufenden Kante gebildet ist, wobei das Blech vorbeschichtet ist.

Ein solches Schaltschrankgehäuse ist aus der DE 91 06 011 U1 und/oder aus der EP 0 319 483 A1 bekannt.

Im Stand der Technik sind Schaltschrankgehäuse aus einzelnen Blechstücken gefertigt, wobei die Wände derartiger Schaltschränke an ihren Kanten miteinander verschweißt werden. Es sind Schaltschrankgehäuse bekannt, die aus Schwarzblech, das heißt Blech ohne Beschichtung, auf Stanz-Biegemaschienen und Profilieranlagen mit bekannten Fertigungsmethoden hergestellt werden. Die beim Ausschneiden der Blechstücke entstehenden Schnittkanten werden durch das nachträgliche Beschichten der Oberfläche abgedeckt.

An den bekannten Schaltschrankgehäusen ist nachteilig, dass alle Wände des Schaltschrankes elektrisch gekoppelt sind. Eine elektrische Spannung, welche auf eine oder mehrere Wände des Schaltschrankgehäuses wirkt, verteilt sich somit auf das gesamte Schaltschrankgehäuse.

Nachteilig ist an den bekannten Schaltschrankgehäusen, dass durch das Verschweißen der Blechteile und nachträgliche Beschichten der Oberfläche zusätzliche Arbeitsgänge nötig sind und somit die Herstellung insgesamt aufwändig ist.

Ausgehend von diesem Stand der Technik ist es Aufgabe der Erfindung ein Schaltschrankgehäuse anzugeben bei welchem Rück- und Seitenwände von der Deck- und Bodenwandelektrisch entkoppelt sind beziehungsweise elektrisch isoliert sind und welches Gehäuse einfacher zu fertigen ist als die bekannten Schaltschrankgehäuse des Stands der Technik.

Diese Aufgabe wird gelöst durch ein Schaltschrankgehäuse der eingangs genannten Art. Dieses zeichnet sich dadurch aus, dass
- die Bodenwand mindestens ein elektrisch isoliertes Kopfteil und mindestens ein Abdeckteil aufweist;
- die Deckwand mindestens ein elektrisch isoliertes Kopfteil und mindestens ein Abdeckteil aufweist; wobei
   ∘ das jeweilige Kopfteil dafür vorgesehen ist mit dem U-förmig gebogenen Blech verbunden zu werden, derart dass die kopfteilseitige Kante verdeckt ist;
   ∘ das jeweilige Abdeckteil dafür vorgesehen ist, derart an dem jeweiligen Kopfteil befestigt zu sein, dass dieses zumindest teilweise abgedeckt oder überdeckt ist.

Die Idee der Erfindung besteht darin, ein Schaltschrankgehäuse anzugeben, bei welchem die Bodenwand und die Deckwand von der Rückwand und den Seitenwänden elektrisch isoliert ist und welches einfacher zu fertigen ist als die bekannten Schaltschrankgehäuse des Stands der Technik.

Die Isolierung der Boden- und der Deckwand von der Rückwand und den Seitenwänden ist in vorteilhafter Weise durch eine Zweiteilung der Bodenwand und der Deckwand bewirkt. Die Boden- und die Deckwand sind jeweils aus einem elektrisch isolierten Kopfteil und einem zugehörigen Abdeckteil gebildet. Das jeweilige Abdeckteil ist mit dem jeweiligen Kopfteil verbunden, wodurch das Abdeckteil von dem gebogenen Blech elektrisch entkoppelt ist. Das U-förmig gebogene Blech bildet das Mantelteil des Schaltschrankgehäuses.

In vorteilhafter Weise wird zur Vereinfachung der Fertigung des Schaltschrankgehäuses ein beschichtetes Blech zur Herstellung der Rückwand und der Seitenwände verwendet. Die offenen Schnittkanten des beschichteten Bleches sind durch die Boden- und die Deckwand abgedeckt. Es ist somit in vorteilhafter Weise kein zusätzlicher Beschichtungsschritt während der Herstellung des Schaltschrankgehäuses notwendig. Durch das direkte Anschließen der Boden- und der Deckwand an das U-förmig gebogene Blech sind in vorteilhafter Weise keine Schnittkanten des vorbeschichteten Bleches sichtbar, da die Schnittkanten jeweils nach innen in den nicht sichtbaren Bereich gebogen sind.

Durch die Verwendung eines vorbeschichteten Bleches zur Fertigung der Seitenwände und der Rückwand ist das erfindungsgemäße Schaltschrankgehäuse somit in vorteilhafter Weise einfacher zu fertigen als bekannte Schaltschrankgehäuse des Stands der Technik, da auf das nachträgliche Beschichtung des Schaltschrankgehäuses verzichtet werden kann. Das aus der Rück- und den Seitenwänden gebildete Mantelteil des Schaltschrankes ist daher durch das U-förmig gebogene Blech einstückig ausgebildet.

Die Grundidee der Erfindung besteht darin, ein Schaltschrankgehäuse anzugeben, bei welchem zumindest die Boden- und die Deckwand von der Rückwandund den Seitenwänden, das heißt dem Mantelteil, elektrisch isoliert ist, und welches insgesamt einfacher zu fertigen ist als die Schaltschrankgehäuse des Stands der Technik.

In einer vorteilhaften Variante ist das jeweilige Kopfteil aus mindestens zwei Kopfteilsegmenten zusammengesetzt, so dass die Breite des jeweiligen Kopfteils auf die Breite der Rückwand anpassbar ist. In vorteilhafterweise kann die Rückwand des Mantelteils somit in unterschiedlichen Breiten gefertigt werden, wobei die Breite der Bodenwand und der Deckwand durch das Zusammenfügen der entsprechenden Anzahl von Kopfteilsegmenten auf die Breite der Rückwand anpassbar ist. Die Breite der Boden- und der Decken- beziehungsweise Deckwand kann somit in vorteilhafter Weise flexibel auf die Breite des jeweiligen Schaltschrankgehäuses angepasst werden.

In einer vorteilhaften Variante sind die mindestens zwei Kopfteilsegmente durch mindestens eine schwalbenschwalbenschwanzähnliche Verbindung miteinander verbunden, welche jeweils mit mindestens einer Stiftverbindung gesichert ist. Durch die Ausführung der Verbindung als schwalbenschwalbenschwanzähnliche Verbindung sind die mindestens zwei Kopfteilsegmente in einfacher Art und Weise ohne weitere Hilfsmittel verbindbar. Die schwalbenschwalbenschwanzähnliche Verbindung wird in vorteilhafter Weise durch eine Stiftverbindung gegen selbsttätiges Lösen gesichert. Die Stifte der Stiftverbindung sind in vorteilhafter Weise klemmend in den entsprechenden Gegenaufnahmen gehaltert.

Gemäß einer vorteilhaften Ausführungsform ist das jeweilige Kopfteilsegment so in seiner Breite bemessen, dass mindestens ein Verteilerfeld von den jeweiligen Kopfteilsegmenten der gegenüberliegenden Kopfteile halterbar ist. Die einzelnen Kopfteilsegmente des Kopfteils erfüllen somit mehrere Funktionen: Zum einen ist durch die Kopfteilsegmente die elektrische Isolation gegenüber der Boden- und/oder der Deckwand bewirkt. Des Weiteren ist durch die Kopfteilsegmente die Breite der Boden- und/oder der Deckwand flexibel auf die Breite des jeweiligen Schaltschrankgehäuses anpassbar.

In einer vorteilhaften Ausgestaltung sind die Kopfteilsegmente dafür vorgesehen die Verteilerfelder aufzunehmen. Es sind daher keine weiteren Befestigungsmittel nötig.

Entsprechend einer bevorzugten Ausführungsform ist das U-förmig geformte Blech an seiner Innenseite zumindest teilweise mit einer elektrisch isolierenden Beschichtung versehen, insbesondere mit einem Furnier. Der Isolationswiderstand des Schaltschrankes ist durch die elektrisch isolierende Beschichtung des U-förmig geformten Bleches in vorteilhafter Weise erhöht. Die elektrische Isolation ist beispielsweise aus Spezialkeramik mit Aluminiumoxidanteil, Steatit, Porzellan, Glas und/oder hydrophoben Kunststoffen ausgeführt.

In einer weiteren vorteilhaften Ausführung ist auf die Innenseite des U-förmig geformten Bleches ein elektrisch isolierendes Furnier, beispielsweise aus glasfaserverstärktem Kunststoff aufgebracht.

In einer weiteren Erfindungsvariante ist die die elektrisch isolierende Beschichtung mindestens eine einschiebbare Isolierwand. Durch das Einschieben der Isolierwand in die Rückwand des U-förmig gebogenen Bleches ist in vorteilhafter Weise eine kostengünstig und einfach zu fertigende elektrische Isolierung herstellbar. In vorteilhafter Weise ist die einschiebbare Isolierwand im Falle einer Beschädigung zusätzlich einfach austauschbar.

Gemäß einer vorteilhaften Variante ist an der Bodenwand und/oder der Deckwand mindestens ein Kabeldurchführungsmittel einsetzbar. Durch das Kabeldurchführungsmittel lassen sich elektrische Kabel und/oder elektrische Verbindungen in vorteilhafter Weise in vordefinierter Weise aus dem Schaltschrankgehäuse führen.

In einer weiteren Ausführungsform ist mindestens eines der jeweiligen Kopfteile mit dem U-förmig gebogenen Blech wiederlösbar oder reversibel lösbar verbunden, wobei insbesondere die umlaufende Kante des Bleches zumindest teilweise Z-Förmig gebogen ist, so dass mindestens eines der jeweiligen Kopfteile mit dem U-förmig gebogenen Blech verrastbar ist. Durch eine Z-Förmig gebogene Kante ist in vorteilhafter Weise eine schmale und somit raumsparende Verbindung des Kopfteils mit dem U-förmig gebogenen Blech bewirkt.

Vorteilhaft sind diesbezüglich entsprechende aufeinander angepasste und abgestimmte Rastmittel, wie beispielsweise Rasthaken, Rastnasen sowie dazu komplementäre Ausnehmungen, vorsehbar.

Anhand der in der Zeichnung dargestellten Ausführungsbeispiele sollen die Erfindung, weitere Varianten und weitere Vorteile näher beschrieben und verdeutlicht werden.

In der Zeichnung zeigt
- Fig. 1:: ein erstes exemplarisches Schaltschrankgehäuse in Explosionsdarstellung,
- Fig. 2:: eine exemplarische Deckwand in Explosionsdarstellung,
- Fig. 3:: eine Deckwand vor der Montage,
- Fig. 4:: ein zweites exemplarisches Schaltschrankgehäuse,
- Fig. 5:: eine exemplarische Kante eines gebogenen Bleches,
- Fig. 6:: ein exemplarisches Kopfteil eines Schaltschrankgehäuses in Querschnittsansicht,
- Fig. 7:: ein exemplarisch U-förmig gebogenes Blech mit einschiebbarer Isolierwand,
- Fig. 8:: ein exemplarisches U-förmig gebogenes Blech mit einer Seitenauskleidung,
- Fig. 9:: ein exemplarisch U-förmig gebogenes Blech mit einrastbarer Boden- und Deckwand,
- Fig. 10:: eine exemplarische Deckwand mit eingesetzten Kabeldurchführungsmitteln,
- Fig. 11: ein drittes exemplarisches Schaltschrankgehäuse und
- Fig. 12: ein viertes exemplarisches Schaltschrankgehäuse.

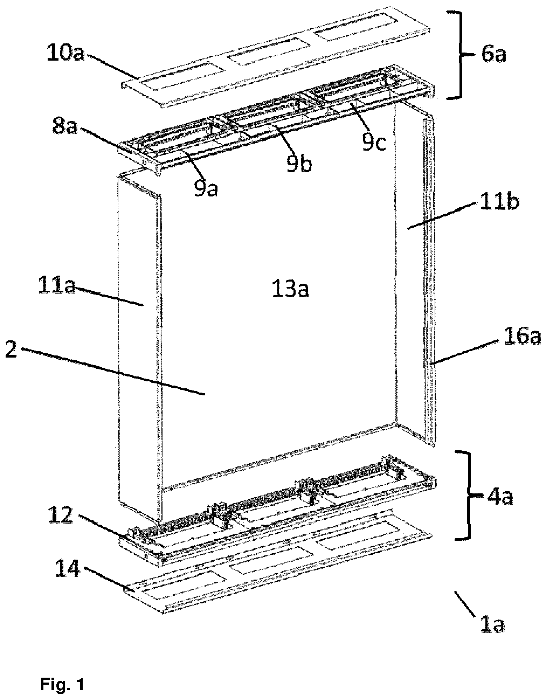

Fig. 1 zeigt ein exemplarisches Schaltschrankgehäuse 1a in Explosionsdarstellung. Das Schaltschrankgehäuse 1a umfasst eine Rückwand 2, welche aus einem Blech 13a gefertigt ist. Das Blech 13a ist beispielhaft U-förmig gebogen, wobei es eine umlaufende Kante 16a aufweist, welche nach innen gebogen ist. Das Blech 13a ist an seiner Oberseite mit einer Deckwand 6a und an seiner Unterseite mit einer Bodenwand 4a verbunden. Die umlaufende Kante 16a ist zumindest teilweise von der Deckwand 6a und der Bodenwand 4a verdeckt. Die Deckwand 6a umfasst ein Abdeckteil 10a, welches auf einem Kopfteil 8a befestigt ist. Die Bodenwand 4a umfasst ein Kopfteil 12, welches auf einem Abdeckteil 14 befestigt ist. Das Kopfteil 8a umfasst drei Kopfteilsegmente 9a, 9b, 9c, welche miteinander verbunden sind, so dass diese mit der Breite des U-förmig gebogenen Bleches übereinstimmen. Die wesentlichen Bestandteile des Schaltschrankgehäuses sind das U-förmige Mantelteil, welches vorzugsweise aus vorbeschichtetem Blech hergestellt ist, die Deckelteile und die Blechabdeckungen, welche vorzugsweise auch aus vorbeschichtetem Blech hergestellt sind. Das Deckelteil ist vorzugsweise ein einstückig gespritzes Kunststoffteil. Die Blechabdeckung wird über das Deckelteil vorzugsweise gerastet, verklebt oder verschraubt mit dem U-förmig gebogenen Blech 13a verbunden. Beispielhaft ist das Deckelteil stirnseitig auf das Mantelteil gesteckt und/oder verklebt.

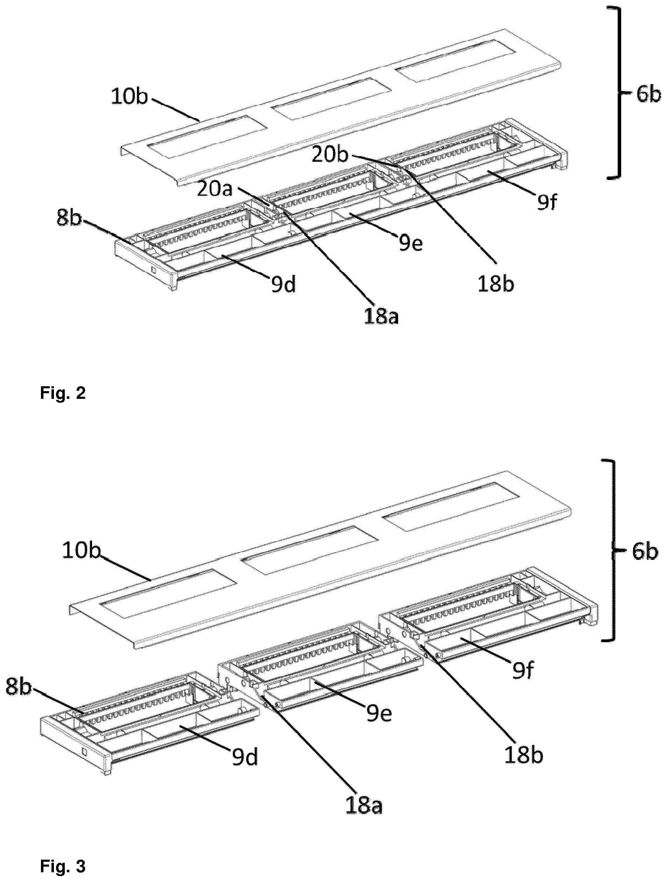

Fig. 2 zeigt eine Deckwand 6b in Explosionsdarstellung. Die Deckwand 6b umfasst ein Abdeckteil 10b welches mit einem Kopfteil 8b verbunden ist. Das Kopfteil 8b ist aus drei Kopfteilsegmenten 9d, 9e, 9f zusammengesetzt. Die Kopfteilsegmente 9d, 9e, 9f sind jeweils durch schwalbenschwanzähnliche Verbindungen 18a, 18b miteinander verbunden, wobei die schwalbenschwalbenschwanzähnlichen Verbindungen 18a, 18b jeweils durch Stiftverbindungen 20a, 20b gegen selbsttätiges Lösen gesichert sind. In der Fig. 2 ist das Deckelteil vor der Montage der Blechabdeckung dargestellt. Das Deckelteil ist beispielsweise einstückig aus isoliertem Kunststoff gefertigt.

Fig. 3. zeigt eine Deckwand 6b vor der Montage. Die Deckwand 6b umfasst ein Abdeckteil 10b und drei Kopfteilsegmente 9d, 9e, 9f. Die Kopfteilsegmente 9d, 9e, 9f und das Abdeckteil 10b bilden zusammen die Deckwand 6b. Die Kopfteilsegmente 9d, 9e, 9f umfassen jeweils eine schwalbenschwanzähnliche Verbindung 18a, 18b, wobei die schwalbenschwanzähnlichen Verbindungen 18a, 18b jeweils durch Stiftverbindungen vor dem selbsttätigen Lösen gesichert sind. Die Deckwand 6b kann somit flexibel auf unterschiedliche Breiten des jeweiligen Schaltschrankgehäuses angepasst werden.

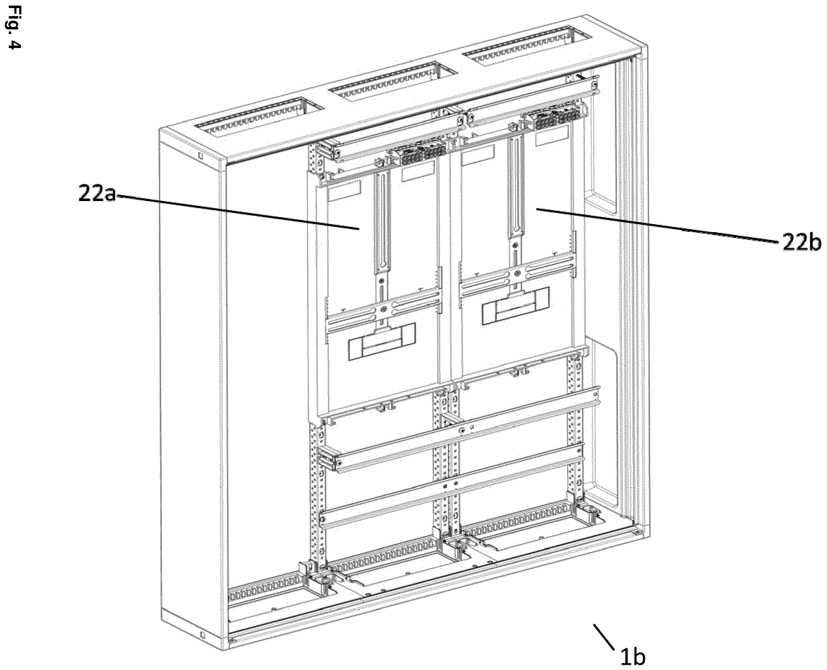

Fig. 4 zeigt ein exemplarisches Schaltschrankgehäuse 1b. Das Schaltschrankgehäuse 1b umfasst zwei Verteilerfelder 22a, 22b. Die Verteilerfelder 22a, 22b sind mit den jeweiligen Kopfteilsegmenten des Schaltschrankgehäuses 1b verbunden. Die Kopfteilsegmente sind beispielsweise entsprechend der DIN-Norm 43870 in ihren jeweiligen Breitenverhältnissen angepasst. In der Figur 4 ist ein Zähler- und/oder Verteilerschrank mit eingebautem Zählerfeld dargestellt, wobei die Deckelteile gleichzeitig die Aufnahme für die jeweiligen Zähler- und/oder Verteilerfelder ist/sind.

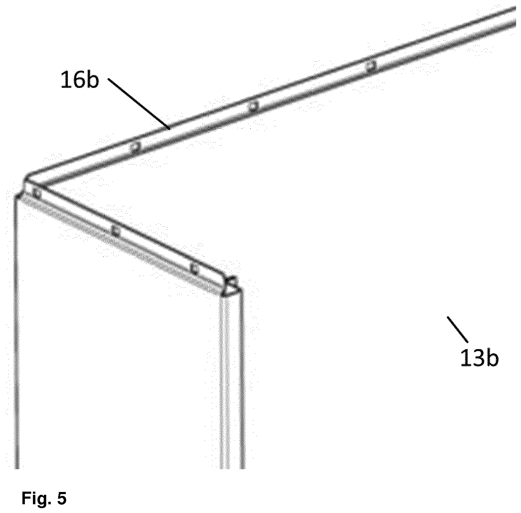

Fig. 5 zeigt eine exemplarische Kante 16b eines Bleches 13b eines Schaltschrankgehäuses. Die Kante 16b weist Rasterungselemente beziehungsweise Rastmittel zur Befestigung des jeweiligen Kopfteils auf. Die Kante 16b ist beispielsweise Z-förmig nach Innen gebogen, so dass diese mit dem jeweiligen Kopfteil verrastbar ist. In der Figur 5 ist somit ein Mantelteil mit Freisparungen oder Ausnehmungen zur Verrastung des Mantelteils mit dem Deckelteil dargestellt.

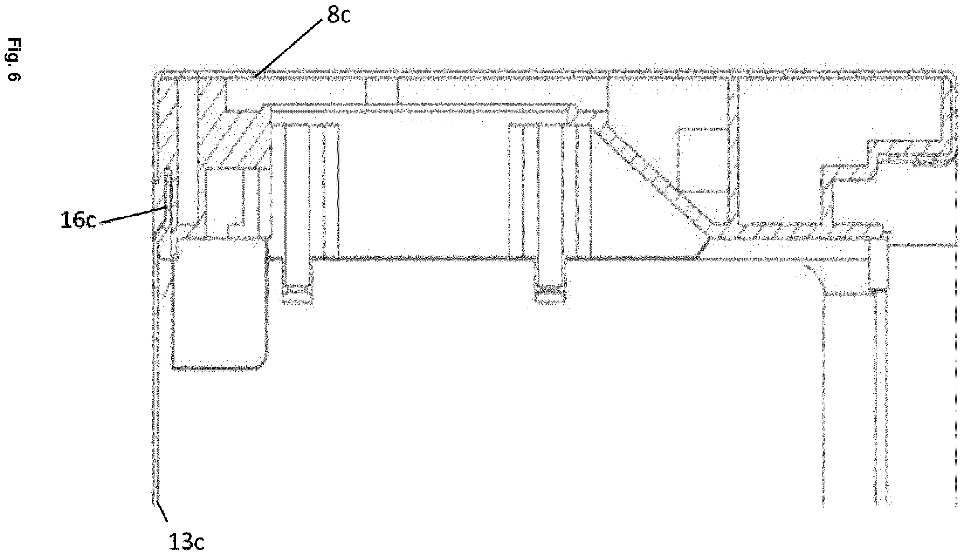

Fig. 6 zeigt ein Kopfteil 8c eines Schaltschrankgehäuses in Querschnittsansicht. Das Schaltschrankgehäuse umfasst ein Blech 13c, welches an seinem beispielhaft dargestellten oberen Ende Z-förmig gebogen ist. Das Kopfteil 8c ist mit der Z-förmig gebogenen Kante verrastet, so dass das Blech und die Kante wiederlösbar verbunden sind. Das Kopfteil 8c weist entsprechende Ausnehmungen, beispielsweise Nuten oder Rastlöcher auf, um die Kante 16c aufnehmen zu können. In der Fig. 6 ist somit in Querschnittsansicht ein Deckelteil mit einer Blechabdeckung dargestellt, wobei die Blechabdeckung auf einem Mantelteil montiert ist.

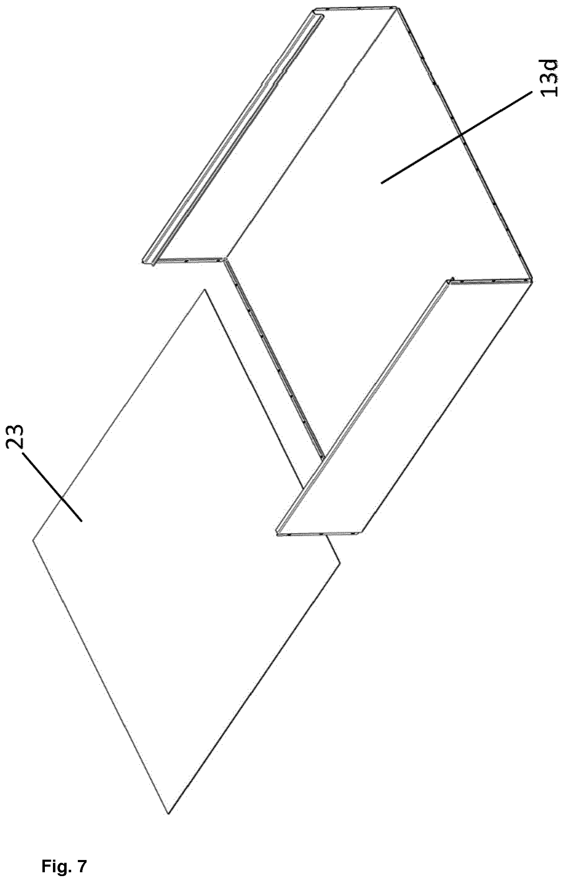

Fig. 7 zeigt ein exemplarisch U-förmig gebogenes Blech 13d mit einschiebbarer Isolierwand 23. Die Isolierwand 23 ist in das U-förmig gebogene Blech so einschiebbar, dass eine feste, aber wiederlösbare Verbindung zwischen Blech 13d und Isolierwand 23 herstellbar ist. Die Isolierwand 23 lässt sich aufgrund ihrer Dünnwandigkeit durch leichtes Aufbiegen über die hervorstehende umlaufende Kante des Bleches einschieben. In einer weiteren Ausführungsform kann die Isolierwand 23 in mindestens eine nutförmige Aufnahme des Bleches eingeschoben werden. In der Fig. 7 ist somit ein Mantelteil dargestellt, welches mit einer Isolierrückwand bestückt wird.

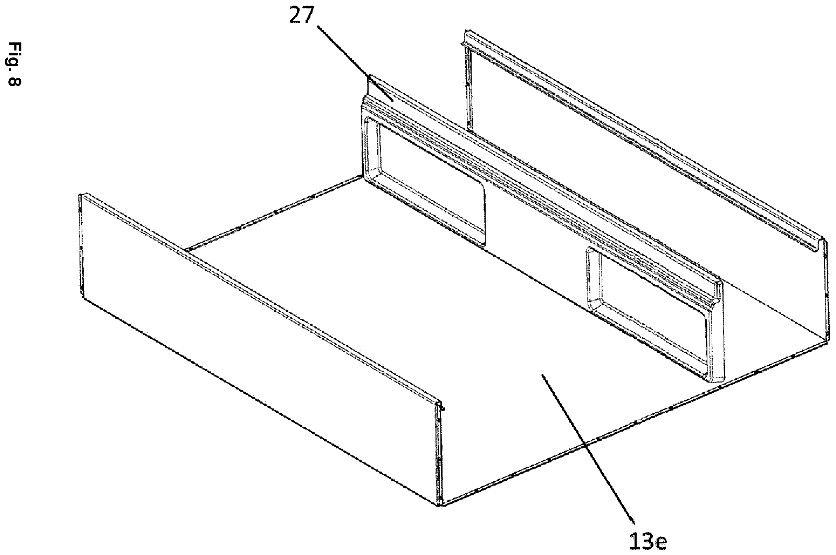

Fig. 8 zeigt ein U-förmig gebogenes Blech 13e mit einer Seitenauskleidung 27. Die Seitenauskleidung 27 wird hinter der umlaufenden Kante verrastet. In einer weiteren Ausführungsform kann die Seitenauskleidung 27 auch mit dem Blech 13e verschraubt oder verklebt werden. Die Seitenauskleidung 27 ist somit verliersicher in dem U-förmig gebogenen Blech, welches das Mantelteil des Schaltschrankes bildet, gehaltert.

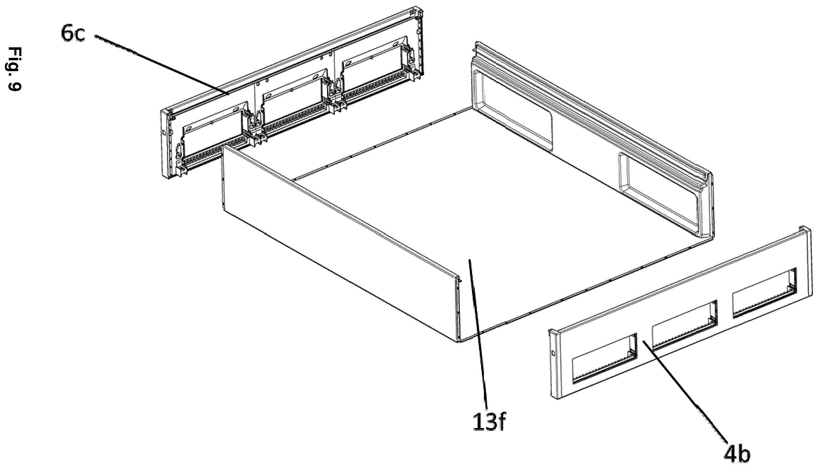

Fig. 9 zeigt ein exemplarisch U-förmig gebogenes Blech 13f mit einrastbarer Boden 4b- und Deckwand 6c. Die Boden 4b- und die Deckwand 6c werden nach Einrasten der Seitenauskleidung mit dem Blech 13f verrastet. Somit ist die Seitenauskleidung verliersicher in dem U-förmig gebogenen Blech gehaltert. In einer weiteren Ausführungsform kann die Boden 4b- und/oder die Deckwand 6c zusätzlich mit der Seitenauskleidung verbunden sein, wodurch die Biege- und Torsionssteifigkeit des Schaltschrankgehäuses in vorteilhafter Weise optimiert ist.

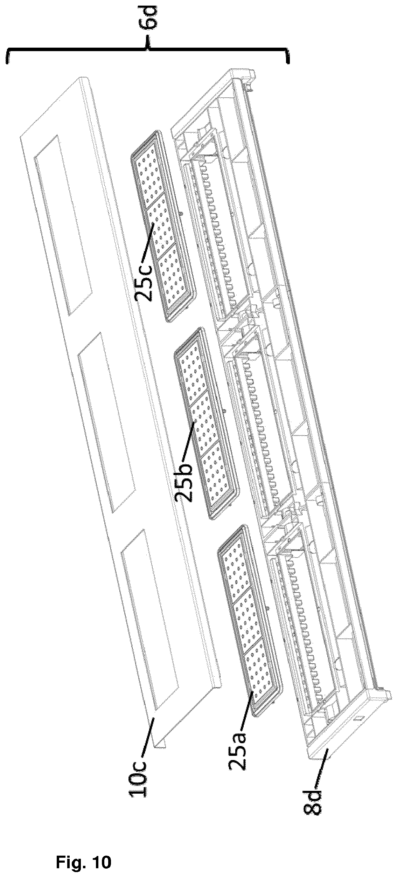

Fig. 10 zeigt eine exemplarische Deckwand 6d mit eingesetzten Kabeldurchführungsmitteln 25a, 25b, 25c. Die Deckwand 6d umfasst zusätzlich ein Kopfteil 8d und ein Abdeckteil 10c, wobei die Kabeldurchführungsmittel 25a, 25b, 25c in korrespondierende Ausnehmungen des Kopfteils 8d eingesetzt sind. Durch Verbinden, beispielsweise Verrasten, Verkleben, oder Veschrauben des Abdeckteils 10c mit dem Kopfteil 8d sind die Kabeldurchführungsmittel 25a, 25b, 25c in ihrer jeweiligen Lage verliersicher gehaltert.

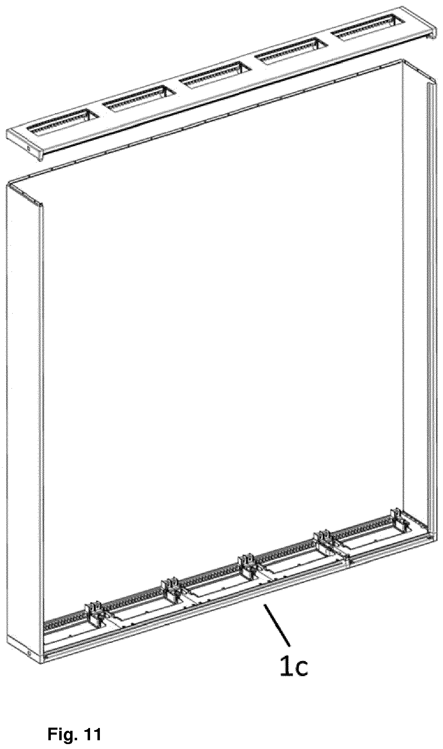

Fig. 11 zeigt ein Schaltschrankgehäuse 1c. Der erfindungsgemäße Zähler- und/oder Verteilerschrank weist in der Ausführung nach DIN 43879 eine Breite von beispielsweise 1300mm auf. In dem dargestellten Schaltschrankgehäuse 1c sind beispielhaft fünf Verteilerfelder an den Kopfteilsegmenten der Deckel- und/oder der Bodenwand befestigbar.

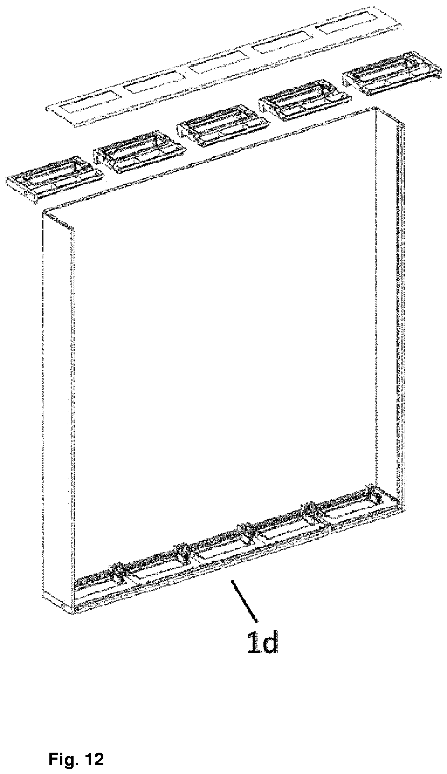

Fig. 12 zeigt ein viertes exemplarisches Schaltschrankgehäuse 1d. Die Figur zeigt einen erfindungsgemäßen Zähler- und/oder Verteilerschrank, wobei dieser Schrank eine beispielhafte Breite von 1300mm aufweist. Die Breite des Deckelteils ist durch einzelne Segmente hergestellt, welche einzeln zusammengesteckt werden. Die Breite des Deckelteils ist somit in vorteilhafter Weise flexibel auf die Breite des U-förmig gebogenen Bleches anpassbar.

Der erfindungsgemäße Zähler- und/oder Verteilerschrank umfasst ein U-förmiges Mantelteil aus vorbeschichtetem Blech mit zwei stirnseitigen Kopfteilen aus isolierendem Material. Die Kopfteile können einstückig gefertigt sein, oder durch mehrere Segmente zusammengesetzt werden und anschließend mit dem Mantelteil verrastet und/oder verklebt werden. Erfindungsgemäß bilden die Kopfteile zum einen die Schrankgeometrie des Gehäuses ab, zum anderen beinhalten diese Teile gleichzeitig die Aufnahmen für ein oder mehrere Zählerfelder gemäß der Norm DIN 43879. Durch das Abdecken der Kopfteile, oder der zusammengesteckten Segmente mit einem Blechteil aus vorbeschichtetem Blech wird erreicht, dass die Teile an der Innenseite des Schrankgehäuses glatt und ohne Öffnungen hergestellt werden können. Die Kopfteile des Schrankgehäuses werden in kunststoffgerechter Fertigungsweise hergestellt und können von der Außenseite des Schaltschrankes befestigt werden. Die Freisparungen der Blechabdeckungen sind durch die Deckelteile, welche beispielsweise aus Kunststoff hergestellt sind, abgedeckt. Die vorbeschichteten Bleche können deshalb auch eine größere Fläche des Schrankgehäuses aus vorbeschichtetem Blech bilden.

Erfindungsgemäß ist das U-förmige Mantelteil aus vorbeschichtetem Blech gefertigt und wird mit den beiden stirnseitigen Deckelteilen verschlossen. Durch die vorteilhafte Anformung der stirnseitigen Kantung des Mantelteils aus vorbeschichtetem Blech, tauchen die Schnittkanten in eine Nut der aus Isolierstoff gefertigten Kopfteile ein und werden durch das oder die Kunststoffteile abgedeckt. Es sind daher keine Schnittkanten des vorbeschichteten Mantelteils zu sehen. Des Weiteren werden Eckbereiche verhindert, an denen zwei Schnittkanten zusammenlaufen und zusätzliche Biegeradien weitere Schnittkanten sichtbar freilegen. Kritische Eckbereiche werden ohne Abkantung stumpf gegen das Kopfteil gestoßen, so dass die Schnittkanten nicht sichtbar sind.

Die Erfindung betrifft einen Zähler- und/oder Verteilerschrank mit einem Schrankgehäuse aus Blech und einer Innenauskleidung des Schrankgehäuses aus isolierendem Material, wobei das Schrankgehäuse vorzugsweise aus vorbeschichtetem Blech gefertigt wird.

Der Erfindung lag daher die Aufgabe zugrunde, einen neuen Zähler- und/oder Verteilerschrank zu schaffen, bei welchem der überwiegende Teil des Schranks aus vorbeschichtetem Blech gefertigt werden kann und die fertigungsbedingten Schnittkanten abgedeckt sind, wobei die Kunststoffteile fertigungsgerecht auszuführen sind. Des Weiteren ist der erfindungsgemäße Zählerschrank in den Breiten der Einfeldbreite (300mm) bis zur Fünffeldbreite (1300mm) herstellbar. Des Weiteren sind die erfindungsgemäßen Schaltschränke in vorteilhafter Weise automatisiert zu fertigen, wobei in einem Arbeitsgang die Verbindung der Schrankteile, sowie die komplette Bestückung des Innenausbaus möglich ist.

### Bezugszeichenliste

- 1a: Erstes Schaltschrankgehäuse
- 1b: Zweites Schaltschrankgehäuse
- 1c: Drittes Schaltschrankgehäuse
- 1d: Viertes Schaltschrankgehäuse

- 2: Rückwand

- 4a: Erste Bodenwand
- 4b: Zweite Bodenwand

- 6a: Erste Deckwand
- 6b: Zweite Deckwand
- 6c: Dritte Deckwand
- 6d: Vierte Deckwand

- 8a: Erstes Kopfteil
- 8b: Zweites Kopfteil
- 8c: Drittes Kopfteil
- 8d: Viertes Kopfteil

- 9a: Erstes Kopfteilsegment
- 9b: Zweites Kopfteilsegment
- 9c: Drittes Kopfteilsegment
- 9d: Viertes Kopfteilsegment
- 9e: Fünftes Kopfteilsegment
- 9f: Sechstes Kopfteilsegment

- 10a: Erstes Abdeckteil
- 10b: Zweites Abdeckteil
- 10c: Drittes Abdeckteil

- 11a: Erste Seitenwand
- 11b: Zweite Seitenwand

- 12: Kopfteil

- 13a: Erstes Blech
- 13b: Zweites Blech
- 13c: Drittes Blech
- 13d: Viertes Blech
- 13e: Fünftes Blech
- 13f: Sechstes Blech

- 14: Abdeckteil

- 16a: Erste Kante
- 16b: Zweite Kante
- 16c: Dritte Kante

- 18a: Erste schwalbenschwanzähnliche Verbindung
- 18b: Zweite schwalbenschwanzähnliche Verbindung

- 20a: Erste Stiftverbindung
- 20b: Zweite Stiftverbindung

- 22a: Erstes Verteilerfeld
- 22b: Zweites Verteilerfeld

- 23: Erste Isolierwand

- 25a: Erstes Kabeldurchführungsmittel
- 25b: Zweites Kabeldurchführungsmittel
- 25c: Drittes Kabeldurchführungsmittel
- 27: Seitenauskleidung

## Patentansprüche

1. Schaltschrankgehäuse (1a-1d) mit mindestens einer Rückwand (2), einer Bodenwand (4a, 4b), einer Deckwand (6a-6d) und mindestens zwei Seitenwänden (11a, 11b), wobei die Rückwand (2) und die Seitenwände (11a, 11b) aus einem U-förmig gebogenen Blech (13a-13f) mit einer umlaufenden oder jeweils entlang der Längsseiten der Seitenwände verlaufenden, nach innen gebogenen umlaufenden Kante (16a-16c) gebildet ist, wobei das Blech (13a-13f) vorbeschichtet ist, **dadurch gekennzeichnet, dass**
• die Bodenwand (4a, 4b) mindestens ein elektrisch isoliertes Kopfteil (12) und mindestens ein Abdeckteil (14) aufweist;
• die Deckwand (6a-6d) mindestens ein elektrisch isoliertes Kopfteil (8a-8d) und mindestens ein Abdeckteil (10a-10c) aufweist; wobei
∘ das jeweilige Kopfteil (8a-8d, 12) dafür vorgesehen ist mit dem U-förmig gebogenen Blech (13a-13f) verbunden zu werden, so dass die jeweilige Kante (16a-16c) verdeckt ist;
∘ das jeweilige Abdeckteil (10a-10c, 14) dafür vorgesehen ist so an dem jeweiligen Kopfteil (8a-8d, 12) befestigt zu werden, dass dieses zumindest teilweise abgedeckt ist.

2. Schaltschrankgehäuse (1a-1d) nach Anspruch 1, **dadurch gekennzeichnet, dass** das jeweilige Kopfteil (8a-8d, 12) aus mindestens zwei Kopfteilsegmenten (9a-9f) zusammengesetzt ist, so dass die Breite des jeweiligen Kopfteils (8a-8d, 12) auf die Breite der Rückwand (2) anpassbar ist.

3. Schaltschrankgehäuse (1a-1d) nach Anspruch 2, **dadurch gekennzeichnet, dass** die mindestens zwei Kopfteilsegmente (9a-9f) dafür vorgesehen sind durch mindestens eine schwalbenschwanzähnliche Verbindung (18a, 18b) miteinander verbunden zu werden, welche insbesondere mit mindestens einer Stiftverbindung (20a, 20b) gesichert ist.

4. Schaltschrankgehäuse (1a-1d) nach Anspruch 3, wobei das jeweilige Kopfteilsegment (9a-9f) so in seiner Breite bemessen ist, dass mindestens ein Verteilerfeld (22a, 22b) von den jeweiligen Kopfteilsegmenten (9a-9f) der gegenüberliegenden Kopfteile (8a-8d, 12) halterbar ist.

5. Schaltschrankgehäuse (1a-1d) nach einem der vorherigen Ansprüche, **dadurch gekennzeichnet, dass** das U-förmig geformte Blech (13a-13f) an seiner Innenseite zumindest teilweise mit einer elektrisch isolierenden Beschichtung versehen ist, insbesondere mit einem Furnier.

6. Schaltschrankgehäuse (1a-1d) nach Anspruch 5, **dadurch gekennzeichnet, dass** die elektrisch isolierende Beschichtung mindestens eine einschiebbare Isolierwand (23) ist.

7. Schaltschrankgehäuse (1a-1d) nach einem der vorherigen Ansprüche, **dadurch gekennzeichnet, dass** an der Bodenwand (4a, 4b) und/oder der Deckwand (6a-6d) mindestens ein Kabeldurchführungsmittel (25a-25c) einsetzbar ist.

8. Schaltschrankgehäuse (1a-1d), nach einem der vorherigen Ansprüche, **dadurch gekennzeichnet, dass** mindestens eines der jeweiligen Kopfteile (8a-8d, 12) mit dem U-förmig gebogenen Blech (13a-13f) wiederlösbar verbunden ist, wobei insbesondere die umlaufende Kante (16a-16c) des Bleches (13a-13f) zumindest teilweise Z-Förmig gebogen ist, so dass mindestens eines der jeweiligen Kopfteile (8a-8d, 12) mit dem U-förmig gebogenen Blech (13a-13f) verastbar ist.

## Claims

1. Switchgear cabinet housing (1a-1d) having at least one rear wall (2), a base wall (4a, 4b), a top wall (6a-6d) and at least two side walls (11a, 11b), wherein the rear wall (2) and the side walls (11a, 11b) are formed from a metal sheet (13a-13f) which is bent into a U shape and which has an encircling, inwardly bent edge (16a-16c) running in encircling fashion or in each case along the longitudinal sides of the side walls, wherein the metal sheet (13a-13f) is pre-coated, **characterized in that**
• the base wall (4a, 4b) has at least one electrically insulated head part (12) and at least one cover part (14);
• the top wall (6a-6d) has at least one electrically insulated head part (8a-8d) and at least one cover part (10a-10c); wherein
∘ the respective head part (8a-8d, 12) is provided for being connected to the metal sheet (13a-13f) bent into a U shape, such that the respective edge (16a-16c) is covered;
∘ the respective cover part (10a-10c, 14) is provided for being fastened to the respective head part (8a-8d, 12) such that the latter is at least partially covered.

2. Switchgear cabinet housing (1a-1d) according to Claim 1, **characterized in that** the respective head part (8a-8d, 12) is assembled from at least two head part segments (9a-9f), such that the width of the respective head part (8a-8d, 12) can be adapted to the width of the rear wall (2).

3. Switchgear cabinet housing (1a-1d) according to Claim 2, **characterized in that** the at least two head part segments (9a-9f) are provided for being connected to one another by means of at least one dovetail-like connection (18a, 18b), which is secured in particular by means of at least one pin connection (20a, 20b).

4. Switchgear cabinet housing (1a-1d) according to Claim 3, wherein the respective head part segment (9a-9f) is dimensioned in terms of its width such that at least one distributor panel (22a, 22b) can be held by the respective head part segments (9a-9f) of the opposite head parts (8a-8d, 12).

5. Switchgear cabinet housing (1a-1d) according to one of the preceding claims, **characterized in that** the metal sheet (13a-13f) formed into a U shape is, on its inner side, at least partially equipped with an electrically insulating coating, in particular with a veneer.

6. Switchgear cabinet housing (1a-1d) according to Claim 5, **characterized in that** the electrically insulating coating is at least one insertable insulating wall (23).

7. Switchgear cabinet housing (1a-1d) according to one of the preceding claims, **characterized in that** at least one cable leadthrough means (25a-25c) is insertable on the base wall (4a, 4b) and/or on the top wall (6a-6d).

8. Switchgear cabinet housing (1a-1d) according to one of the preceding claims, **characterized in that** at least one of the respective head parts (8a-8d, 12) is releasably connected to the metal sheet (13a-13f) bent into a U shape, wherein, in particular, the encircling edge (16a-16c) of the metal sheet (13a-13f) is at least partially bent into a Z shape, such that at least one of the respective head parts (8a-8d, 12) is lockable with detent action to the metal sheet (13a-13f) bent into a U shape.

## Revendications

1. Boîtier d'armoire de commande (1a-1d) comprenant au moins une paroi arrière (2), une paroi de fond (4a, 4b), une paroi de plafond (6a-6d) et au moins deux parois latérales (11a, 11b), la paroi arrière (2) et les parois latérales (11a, 11b) étant constituées d'une tôle (13a-13f) pliée en U pourvue d'un bord périphérique (16a-16c) replié vers l'intérieur, s'étendant le long de chacun des côtés longitudinaux des parois latérales ou sur la circonférence, la tôle (13a-13f) étant pré-revêtue, **caractérisé en ce que**
• la paroi de fond (4a, 4b) comporte au moins une partie de tête électriquement isolée (12) et au moins une partie de recouvrement (14) ;
• la paroi de plafond (6a-6d) comporte au moins une partie de tête électriquement isolée (8a-8d) et au moins une partie de recouvrement (10a-10c) ;
∘ la partie de tête respective (8a-8d, 12) étant prévue pour être reliée à la tôle (13a-13f) pliée en U de sorte que le bord respectif (16a-16c) est recouvert ;
∘ la partie de recouvrement respective (10a-10c, 14) étant prévue pour être fixée à la partie de tête respective (8a-8d, 12) de manière à être au moins partiellement recouverte.

2. Boîtier d'armoire de commande (1a-1d) selon la revendication 1, **caractérisé en ce que** la partie de tête respective (8a-8d, 12) se compose d'au moins deux segments de parties de tête (9a-9f) de sorte que la largeur de chaque partie de tête (8a-8d, 12) puisse être adaptée à la largeur de la paroi arrière (2).

3. Boîtier d'armoire de commande (1a-1d) selon la revendication 2, **caractérisé en ce que** les au moins deux segments de parties de tête (9a-9f) sont prévus pour être reliés entre eux par au moins une liaison à queue d'aronde (18a, 18b) qui est assurée en particulier au moyen d'au moins une liaison par broche (20a, 20b).

4. Boîtier d'armoire de commande (1a-1d) selon la revendication 3, dans lequel le segment de parties de tête respectif (9a-9f) est dimensionné en largeur de telle sorte qu'au moins un panneau de distribution (22a, 22b) puisse être maintenu par les segments de parties de tête respectifs (9a-9f) des parties de tête opposées (8a-8d, 12).

5. Boîtier d'armoire de commande (1a-1d) selon l'une des revendications précédentes, **caractérisé en ce que** la tôle (13a-13f) formée en U est pourvue sur son côté intérieur au moins partiellement d'un revêtement électriquement isolant, en particulier d'un placage.

6. Boîtier d'armoire de commande (1a-1d) selon la revendication 5, **caractérisé en ce que** le revêtement électriquement isolant est au moins une paroi isolante escamotable (23).

7. Boîtier d'armoire de commande (1a-1d) selon l'une des revendications précédentes, **caractérisé en ce qu'**au moins un moyen de guidage de câble (25a-25c) peut être utilisé au niveau de la paroi de fond (4a, 4b) et/ou de la paroi de plafond (6a-6d).

8. Boîtier d'armoire de commande (1a-1d) selon l'une des revendications précédentes, **caractérisé en ce qu'**au moins une des parties de tête respectives (8a-8d, 12) est reliée de façon amovible à la tôle (13a-13f) pliée en U, en particulier le bord périphérique (16a-16c) de la tôle (13a-13f) étant plié au moins partiellement en forme de Z de telle sorte qu'au moins une des parties de tête respectives (8a-8d, 12) peut être encliquetée avec la tôle (13a-13f) pliée en U.
